**Europäisches Patentamt**

**European Patent Office**

**Office européen des brevets**

(19)

(11) Veröffentlichungsnummer : **0 545 856 A1**

(12) # EUROPÄISCHE PATENTANMELDUNG

(21) Anmeldenummer : **92810866.1**

(51) Int. Cl.⁵ : **B32B 27/08,** B65D 65/40

(22) Anmeldetag : **09.11.92**

(30) Priorität : **29.11.91 CH 3515/91**

(43) Veröffentlichungstag der Anmeldung :
**09.06.93 Patentblatt 93/23**

(84) Benannte Vertragsstaaten :
**AT BE CH DE DK ES FR GB GR IE IT LI LU NL
PT SE**

(71) Anmelder : **ALUSUISSE-LONZA SERVICES AG
CH-8034 Zürich (CH)**

(72) Erfinder : **Pietzsch, Joachim
Zollstrasse 26
CH-8212 Neuhausen am Rheinfall (CH)**

(54) **Kunststoffolienverbunde.**

(57)     Kunststoffolienverbunde für Verpackungen, enthaltend eine Permeabilitätssperrschicht, wobei die Kunststoffolien eines Kunststoffolienverbundes aus Werkstoffen der gleichen Stoffgruppe, ausgewählt aus den Polyolefinen, Poyestern oder Polyamiden, aufgebaut sind. Zwischen wenigstens zwei Kunststoffolien befindet sich eine Permeabilitätssperrschicht aus Oxiden und/oder Nitriden von Metallen und/oder Halbmetallen, die durch Vakuumdünnschichtverfahren erzeugt ist.

EP 0 545 856 A1

Vorliegende Erfindung betrifft Kunststoffolienverbunde, enthaltend eine Permeabilitätssperre und die Verwendung solcher Kunststoffolienverbunde.

Beispielsweise Produkte der Nahrungs-, Genussmittel- und Kosmetikindustrie, die leicht verderblich sind oder sonst Qualitätseinbussen während der Lagerzeit zeigen, müssen gegen Ausseneinflüsse, wie Fremdaromen, Fremdgerüche, Feuchtigkeit, Sauerstoffeindringung und gegen Verluste von Stoffen des Füllgutes nach aussen durch geeignete Packstoffe geschützt werden. Solche Packstoffe sind in der Regel Kunststoffolienverbunde. Der Schutz des Füllgutes kann durch Einbau von Barriereschichten oder Permeabilitätssperrschichten in den Packstoff, wie z.B. Aluminiumfolie, EVOH oder PVDC erzielt werden. Nachteil von Aluminiumfolie ist die Beeinflussung der Sortenreinheit beim Rezyklieren von Packstoffen. EVOH ist feuchtigkeitsempfindlich und zeigt verarbeitungstechnische Schwierigkeiten, PVDC ist, wie alle chlorhaltigen Kunststoffe, vom Umweltgedanken her, nicht wünschenswert.

Bei flexiblen Packstoffen, z.B. für Beutel, bzw. halbstarren Packstoffen, z.B. für Deckel, werden heute vielfach Verbundlaminate eingesetzt, die aus verschiedenartigen, untereinander fest verbundenen Filmen, Folien und/oder anderen Schichten, wie z.B. Kleber oder Barriereschichten, bestehen. Dabei sollen die Eigenschaften der einzelnen Komponenten vorteilhaft miteinander kombiniert werden.

Man ist heute verstärkt bestrebt Abfälle aus Verpackungsmaterial einer sinnvollen Wiederverwertung, dem sog. Recycling zuzuführen. Der Materialmix, der bei einer mehrschichtigen Verbundfolie vorliegt, kann hierbei zu Problemen führen. Durch das Vermischen verschiedener Kunststoffarten, wie z.B. Polyolefine und Polyester, entstehen bei der Wiederaufarbeitung, wie der Zerkleinerung und Regranulation, dieser Verpackungsabfälle Materialien mit reduzierten Eigenschaften und eingeschränkten Verwertungsmöglichkeiten.

Aufgabe vorliegender Erfindung ist es, Kunststoffolienverbunde insbesondere für die Verwendung als Packstoffe zur Verfügung zu stellen, welche die damit verpackten Güter gegen Ausseneinflüsse und gegen Verlust von Stoffen des Füllgutes nach aussen schützt und deren Abfälle, weitestgehend unter Erhaltung der Sortenreinheit, rezykliert werden können.

Erfindungsgemäss wird die Aufgabe dadurch gelöst, dass die Kunststofffolien eines Kunststoffolienverbundes aus Werkstoffen der gleichen Stoffgruppe aufgebaut sind und zwischen wenigstens zwei Kunststoffolien sich eine Permeabilitätssperrschicht aus Oxiden und/oder Nitriden von Metallen oder Halbmetallen, die durch Vakuumdünnschichtverdampfung erzeugt ist, befindet.

Zweckmässig bestehen oder enthalten die einzelnen Kunststofffolien eines Kunststoffolienverbundes, als Werkstoffe, jeweils nur eine Stoffgruppe, ausgewählt aus den Polyolefinen, Polyestern oder Polyamiden. Demnach hat eine Stoffgruppe die Bedeutung eines Materials bestehend aus oder enthaltend nur Polyolefine, oder bestehend aus oder enthaltend nur Polyester oder bestehend aus oder enthaltend nur Polyamide.

Beispiele von Polyolefinen sind Polyethylene, z.B. Polyethylen hoher Dichte (HDPE, Dichte grösser als 0,944g/cm3), Polyethylen mittlerer Dichte (MDPE, Dichte 0,926-0,940 g/cm$^3$), lineares Polyethylen mittlerer Dichte (LMDPE, Dichte 0,926-0,940 g/cm$^3$), Polyethylen niedriger Dichte (LDPE, Dichte 0,910-0,925 g/cm$^3$) und lineares Polyethylen niedriger Dichte (LLDPE, Dichte 0,916-0,925 g/cm$^3$), Polypropylene, wie axial oder biaxial orientiertes Polypropylen oder gegossenes (cast) Polypropylen, amorphes oder kristallines Polypropylen oder Gemische davon, ataktisches oder isotaktisches Polypropylen oder Gemische davon, Poly-1-buten, Poly-3-methylbuten, Poly-4-methylpenten und Copolymere davon, wie z.B. von Polyethylen mit Vinylacetat, Vinylalkohol, Acrylsäure, z.B. Ionomerharze, wie Copolymerisate von Ethylen mit etwa 11 % Acrylsäure, Methacrylsäure, Acrylestern, Tetrafluorethylen oder Polypropylen, sowie statistische Copolymere, Block-Copolymere oder Olefinpolymer-Elastomer-Mischungen.

Thermoplaste auf Ester-Basis sind beispielsweise Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -O- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Andere Thermoplaste auf Ester-Basis sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Zweckmässige Thermoplaste auf Ester-Basis sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -O- unterbrochen sind.

Bevorzugte Thermoplaste auf Ester-Basis sind Polylalkylenterephthalate mit Alkylengruppen oder -resten mit 2 bis 4 Kohlenstoffatomen und ganz besonders bevorzugt sind Polyethylenterephthalate. Zu diesen Polyethylenterephthalaten sind auch A-PET, PETP und das genannte PETG oder G-PET zu zählen.

Zu den Thermoplasten auf Amid-Basis gehören beispielsweise Polyamid 6, ein Homopolymerisat aus $\varepsilon$-Caprolactam (Polycaprolactam); Polyamid 11, Polyamid 12, ein Homopolymerisat aus $\omega$-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon.

Innerhalb gleicher Stoffgruppen werden die Polyethylene, Polypropylene, Polyethylenterephthalate oder Polycaprolactame besonders bevorzugt.

Mit den Werkstoffen können z.B. Monofilme oder -schichten und Verbunde von zwei oder mehreren Filmen oder Schichten aus Kunststoffen aus Polymeren, Polymergemischen oder Misch-, Block-, Pfropf- oder Copolymeren umfasst sein.

Die Kunststoffolien an sich können als Monofilm, jedoch auch als Verbund zweier oder mehrerer Filme vorliegen, wobei die Stoffgruppe aller Filme eines Verbundes im wesentlichen immer dieselbe ist.

Sind die Polymere oder die Kunststoffolien mit Zusätzen, wie z.B. Stabilisatoren, Weichmachern, Füllstoffen etc. versehen, so enthalten die einzelnen Kunststoffolien eines Verbundes zweckmässig die gleichen oder annähernd gleichen Zusätze, bevorzugt in gleichen oder ähnlichen Mengenverhältnissen.

Die Dicke der einzelnen Kunststoffolien, die einen Kunststoffolienverbund bilden, kann z.B. zwischen 8 und 2000 µm, zweckmässig zwischen 10 und 600 µm, bevorzugt zwischen 20 und 500 µm und besonders bevorzugt zwischen 12 und 150 µm liegen.

Als Permeabilitätssperre, Sperr- oder Barriereschicht nach vorliegender Erfindung werden durch Vakuumdünnschichtverdampfung erzeugte keramische Schichten von Oxiden und/oder Nitriden von Metallen und/oder Halbmetallen angewendet.

Die keramische Schicht wird zweckmässig durch ein Vakuumdünnschichtverfahren aufgebracht, wobei physikalische Beschichtungsverfahren (PVD) bzw. chemische Beschichtungsverfahren (CVD) mit Plasmaunterstützung zum Einsatz kommen können. Bevorzugt werden physikalische Beschichtungsverfahren, insbesondere auf der Basis von Elektronenstrahlverdampfen oder Widerstandsheizen oder induktivem Heizen aus Tiegeln. Besonders bevorzugt ist das Elektronenstrahlverdampfen. Die beschriebenen Verfahren können reaktiv und/oder mit Ionenunterstützung gefahren werden.

Die Dicke der keramischen Schicht kann von 5 bis 500 nm betragen, wobei Schichtdicken von 10 bis 200 nm bevorzugt und von 40 bis 150 nm besonders bevorzugt sind.

Als keramische Schicht können die Oxide und/oder Nitride von Metallen und/oder Halbmetallen, z.B. diejenigen des Siliciums, des Aluminiums, des Eisens, Nickels, Chroms, Tantals, Molybdäns, Magnesiums, Bleis oder Mischungen daraus angewendet werden. Damit umfasst sind auch die Oxinitride der genannten Metalle oder Halbmetalle.

Als keramische Schichten sind die Siliciumoxide oder Aluminiumoxide zweckmässig. Die Siliciumoxide können die Formel allgemeine Formel $SiO_x$, wobei x zweckmässig eine Zahl von 1 bis 2 darstellt, bevorzugt von 1,1 bis 1,9 und insbesondere von 1,1 bis 1,7 darstellt, aufweisen. Die Aluminiumoxide können die Formel $Al_yO_z$, wobei y/z z.B. eine Zahl von 0,2 bis 1,5 und bevorzugt von 0,65 bis 0,85 darstellt, aufweisen.

Besonders bevorzugt sind Permeabilitätssperrschichten in Form einer 10 bis 500 nm dicken keramischen Schicht eines Siliciumoxides der allgemeinen Formel $SiO_x$, wobei x eine Zahl von 1,1 bis 1,7 darstellt oder eines Aluminiumoxides der allgemeinen Formel $Al_yO_z$, wobei y/z eine Zahl von 0,2 bis 1,5 darstellt.

Die Permeabilitätssperrschicht in Form einer keramischen Schicht wird in der Praxis auf wenigstens einer Seite wenigstens einer Kunststoffolie durch eines der genannten Verfahren aufgebracht. Die Kunststoffolie dient demnach als Substrat auf dem die keramische Schicht abgeschieden wird.

Entsprechend den Anforderungen an die Sperr- oder Barrierewirkung der Permeabilitätssperre, kann die Dicke und Anzahl von keramischen Schichten gewählt werden.

Es kann z.B. eine Kunststoffolie einseitig mit einer keramischen Schicht beschichtet werden und auf die keramische Schicht kann eine weitere Kunststoffolie aufgebracht werden.

Eine andere Ausführungsform kann darin liegen, eine Kunststoffolie beidseitig zu beschichten und auf den keramischen Schichten unbeschichtete Kunststoffolien anzubringen.

In der Praxis sind zweckmässige Kunststoffolienverbunde nach vorliegender Erfindung solche, deren Kunststoffolien Polypropylen enthalten oder daraus bestehen und eine Permeabilitätssperrschicht auf eine der Polypropylenfolien aufgebracht ist.

Bevorzugt ist ein Kunststoffolienverbund enthaltend eine Folie aus 20 bis 30 µm dickem orientiertem Polypropylen und eine Folie aus 80 bis 120 µm dickem gegossenem (cast) Polypropylen und eine Permeabilitätssperrschicht, die zwischen der Folie aus orientiertem Polypropylen und der Folie aus gegossenem Polypropylen befindlich ist. Die Permeabilitätssperrschicht kann entweder auf der Folie aus orientiertem Polypropylen oder dem gegossenen Polypropylen angebracht sein.

Weitere in der Praxis zweckmässige Kunststoffolienverbunde nach vorliegender Erfindung sind solche, deren Kunststoffolien Polyethyleriterephthalate enthalten oder daraus bestehen und eine Permeabilitätssperrschicht auf eine der Polyethylenterephthalatfolien aufgebracht ist.

Bevorzugt ist ein Kunststoffolienverbund enthaltend eine Folie aus 10 bis 15 $\mu$m dickem Polyethylenterephthalat und eine Folie aus 80 bis 120 $\mu$m dickem G-PET und eine Permeabilitätssperrschicht, die zwischen der Folie aus Polyethylenterephthalat und der Folie aus G-PET befindlich ist. Die Permeabilitätssperrschicht kann entweder auf der Folie aus Polyethylenterephthalat oder dem G-PET angebracht sein.

Zweckmässig sind die Kunststoffolien unter sich oder die mit der Permeabilitätssperrschicht beschichtete Seite einer Kunststoffolie mit einer weiteren Kunststoffolie mit einem Haftvermittler oder Kleber verbunden.

Als Haftvermittler zwischen den Kunststoffolien, zwischen den Kunststoffolien und den keramischen Schichten oder zwischen den keramischen Schichten können beispielsweise Vinylchlorid-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Copolymerisate, Phenolharze, Kautschukderivate, Acrylharze, Acrylharze mit Phenol bzw. Epoxidharzen, siliciumorganische Verbindungen, wie Organosilane, modifizierte Polyolefine, wie säuremodifizierte Polyolefine oder Ethylenacrylsäure (EAA).

Bevorzugt werden EAA (Ethylenacrylsäure) oder modifizierte Polyolefine, wie z.B. modifizierte Polypropylene.

Ein bevorzugtes modifiziertes Polypropylen ist ein Addukt aus Maleinsäureanhydrid und einem Ethylen-Propylen-Copolymer. Ganz besonders bevorzugt werden Dispersionen von modifizierten Polyolefinen. Ein Beispiel einer Dispersion eines modifizierten Polypropylens ist Morprime (Markenname der Firma Morton Chemical Division fo Norton Norwich Products, Inc.).

Weitere geeignete Haftvermittler sind Klebstoffe wie Nitrilkautschuk-Phenolharze, Epoxide, Acrylnitril-Butadien-Kautschuk, urethanmodifizierte Acryle, Polyester-co-Polyamide, Heissschmelzpolyester, mit Heissschmelzpolyester vernetzte Polyisocyanate, polyisobutylenmodifizierte Styrol-Butadien-Kautschuke, Urethane, Ethylen-Acrylsäure-Mischpolymere und Ethylenvinylacetat-Mischpolymere.

Werden als Kleber Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber.

Bevorzugt werden Kaschierkleber auf Polyurethan-Basis.

Der Haftvermittler kann beispielsweise in Mengen von 0,1 bis 10 g/m$^2$, zweckmässig in Mengen von 0,8 bis 6 g/m$^2$ und bevorzugt in Mengen von 2 bis 6 g/m$^2$ angewendet werden.

Der Kaschierkleber kann beispielsweise in Mengen von 1 bis 10 g/m$^2$ vorzugsweise in Mengen von 2 bis 8 g/m$^2$ und insbesondere in Mengen von 3 bis 6 g/m$^2$ angewendet werden.

Zur Unterstützung und Verbesserung der Verbundhaftung von Haftvermittler und Kaschierkleber, zwischen den Kunststoffolien, resp. Kunststoffolien und Schicht, ist es oft zweckmässig, der Haftvermittlerschicht auf der kleberzugewandten Seite eine ausreichende Oberflächenspannung zu vermitteln. Die Erhöhung der Oberflächenspannung kann vorzugsweise durch eine Plasma- oder Flammvorbehandlung oder eine Koronabehandlung erfolgen.

Die Laminierung der einzelnen Schichten, resp. Kunststoffolien kann beispielsweise durch Heisskalandrieren, Kaschierung, Extrusionsbeschichtung, Coextrusionsbeschichtung oder durch Extrusionskaschierung erfolgen.

Die erfindungsgemässen Kunststoffolienverbunde weisen eine hohe Sperrwirkung gegenüber chemischen, physikalischen oder mikrobiellen Einflüssen auf und schützen das verpackte Gut vor z.B. Oxidation, Strahlung oder Verderb. Insbesondere sind die Sperreigenschaften gegenüber Luft, Sauerstoff und Wasserdampf, Feuchtigkeit, Aroma und Fremdgerüchen hervorragend.

Die Kunststoffolienverbunde sind besonders geeignet zur sortenreinen Regranulation und zur Wiederverwertung in neuen Kunststoffprodukten.

Die äusserst geringen Mengen der zur Bildung der Permeabilitätssperrschicht aufgebrachten Oxide und/oder Nitride von Metallen und/oder Halbmetallen wirkt sich bei der Wiederverwertung nicht negativ aus.

Deshalb umfasst vorliegende Erfindung auch Verpackungen aus Kunststoff-folienverbunden, wobei die Kunststoffolien des Kunststoffolienverbundes aus Werkstoffen gleicher Stoffgruppen aufgebaut sind und zwischen wenigstens zwei Kunststoffschichten sich eine Permeabilitätssperrschicht aus Oxiden und/oder Nitriden von Metallen und/oder Halbmetallen, die durch Vakuumdünnschichtverfahren erzeugt ist, befindet. Zweckmässig beträgt die Menge an Oxiden und/oder Nitriden von Metallen und/oder Halbmetallen der Permeabilitätssperrschicht 50 bis 400 mg/m$^2$ Kunststoffolienverbund, bevorzugt 100 bis 150 mg/m$^2$ Kunststoffolienverbund und insbesondere 110 bis 130 mg/m² Kunststoffolienverbund.

Der Kunststoffolienverbund kann zur Erweiterung dessen Eigenschaften, insbesondere als Verpackungsmaterial mit einer bzw. mehreren Kunststoffschichten, wie z.B. Kunststoffolien und insbesondere siegelbaren Folien, möglichst gleichen Kunststofftypes mittels Lackkaschierung, z.B. mit lösemittelhaltigen oder lösemittelfreien Klebern, bzw. wasserbasierenden Klebstoffsystemen, durch Extrusionskaschierungen oder durch Extrusionsbeschichtung überzogen werden. Siegelbare Folien können beispielsweise LLDPE, LDPE, MDPE, HDPE, Polypropylen oder Polyethylenterephthalat enthalten oder daraus bestehen. Siegelbare Folien können eine Dicke von 6 bis 100 µm aufweisen. Es können auch eine oder mehrere Schichten z.B. eines Siegellacks oder Heissiegellacks durch eine Lackanwendung auf den Kunststoffolienverbund, beispielsweise in einer Dicke von 1 bis 10 µm, aufgebracht werden.

Damit kann z.B. eine Aussenseite eines Verbundes heissiegelfähig ausgerüstet werden, um schliesslich aus den Verbunden Verpackungsmaterial oder Packstoffe für dicht verschliessbare, flexible oder halbstarre Verpackungen herzustellen.

Dieses Verpackungsmaterial oder diese Packstoffe können auf verschiedene Arten be-druckt (Tief-, Flexo- oder Offsetdruck) werden und zwar entweder auf der Aussenseite der ersten Folie oder im Umkehrdruck auf der Innenseite. Weiterhin kann zum Schutz des Druckbildes auf der Aussenseite ein Schutzlack aufgetragen werden.

Das Verpackungsmaterial oder der Packstoff kann z.B. auf marktüblichen Verpackungsmaschinen zu flexiblen oder halbstarren Verpackungen, wie beispielsweise Siegelnahtbeuteln, Schlauchbeuteln, Standbeuteln, Sachets, Einwicklern, Säcken, Taschen usw. verarbeitet werden. Durch Siegeln mittels Kaltsiegel-, Heissiegel-, Induktions- bzw. Ultraschallsiegeltechnik, bzw. durch Schweissen oder Kleben können Nähte gelegt und Verpackungen erzeugt werden und die Verpackungen dicht verschlossen werden. Diese Verarbeitungstechniken sind an sich bekannt.

Die vorliegende Erfindung betrifft auch die Verwendung der erfindungsgemässen Kunststoffolienverbunde als Verpackungsmaterial für Beutel, wie Siegelnahtbeutel, Schlauchbeutel, Standbeutel, Sachets, Säcke, Taschen und Einwickler, ferner Schalen und Bedeckelungen, wie Nahrungsmittelbehälter und Menueschalen zur Aufnahme von verschiedenen Füllgütern.

Die vorliegende Erfindung betrifft demnach auch Verpackungen aus den erfindungsgemässen Kunststoffolienverbunden. Die Verpackungen eignen sich zur Aufnahme von Füllgütern jeder Art, z.B. der Kosmetikindustrie oder der Nahrungsmittelindustrie, insbesondere jedoch zur Aufnahme von Nahrungs- und Genussmitteln. Die Nahrungsmittel können roh oder in einer zum Verzehr bereiten Form eingefüllt werden. Nach dem Befüllen einer Verpackung und vor oder nach dem Verschliessen resp. Aufsiegeln des Deckels kann die Verpackung sterilisiert werden, beispielsweise im Bereich der Sterilisations-Standard-Bedingungen bei 121°C - 130°C, 2,2 bar - 3,5 bar und während 30 sec. bis 30 Minuten. Die befüllte Verpackung kann bei Raumtemperatur gelagert, gekühlt oder tiefgekühlt werden und vor dem Gebrauch erwärmt, z.B. im Wasserbad, in der Mikrowelle oder auf Kochtemperatur erhitzt werden.

Andere Verwendungszwecke sind z.B. Packungen für den Portionenverbrauch oder Sortimentspackungen.

**Beispiele**

Beispiel 1

a) Es werden Kunststoffolienverbunde hergestellt, wobei eine Kunststoffolie aus orientiertem Polypropylen einer Dicke von 25 µm auf einer Seite mit einer keramischen Schicht beschichtet wird. Die keramische Schicht ist ein Siliciumoxid der allgemeinen Formel $SiO_x$, wobei x die Bedeutung von 1,2 bis 1,7 hat. Die Abscheidung des $SiO_x$ auf dem orientierten Polypropylen erfolgt durch Vakuumdünnschichtverdampfung. Die Schichtdicke beträgt 80 nm. Mittels eines Klebers auf Polyurethan-Basis wird eine 100 µm dicke Folie eines gegossenen Polypropylens aufkaschiert.

b) Ein Kunststoffolienverbund wird hergestellt durch Beschichten einer 100 µm dicken gegossenen Polypropylenfolie mit einer keramischen Schicht. Die keramische Schicht wird durch Vakuumdünnschichtverfahren einseitig auf die Folie aus gegossenem Polypropylen aufgebracht. Die Schicht ist eine $SiO_x$-Schicht, wobei x eine Zahl von 1,2 bis 1,7 bedeutet. Auf diese $SiO_x$-Schicht wird mittels eines Klebers auf Polyurethan-Basis eine Folie aus orientiertem Polypropylen in einer Dicke von 25 µm aufkaschiert.

Die zwei Folien gemäss dem Beispielen 1a) und 1b) werden verschiedenen Tests unterworfen. Es wird die Wasserdampfdurchlässigkeit und die Gas resp. Sauerstoffdurchlässigkeit geprüft. Die Wasserdampfdurchlässigkeit (WVTR) wird nach der Norm ASTM F 372-78 geprüft, die Gas- resp. die Sauerstoffdurchlässigkeit (OXTR) wird nach der Norm ASTM D 3985-81 geprüft. Die ermittelten Resultate sind der Tabelle I zu entnehmen.

Beispiel 2

Eine Polyethylenterephthalatfolie der Dicke von 12 μm wird mit einer SiO$_x$-Schicht im Vakuumdünnschicht-verfahren beschichtet. Die SiO$_x$-Schicht, wobei x eine Zahl von 1,2 bis 1,7 bedeutet, hat eine Dicke von 80 nm. Auf diese beschichtete Folie wird, gegen die keramische Schicht, eine siegelfähige Polyethylenterephthalatschicht auf Copolyester-Basis (G-PET) in einer Dicke von 100 μm mittels Extrusionsbeschichtung ange-bracht. Die so erhaltene Folie wird bezüglich der Wasserdampfdurchlässigkeit und der Gas- resp. Sauerstoffdurchlässigkeit nach den Normen gemäss Beispiel 1 geprüft.

Die ermittelten Resultate sind der Tabelle II zu entnehmen.

Beispiel 3

Eine Polyethylenfolie der Dicke von 12 μm wurde im Vakuumdünnschichtverfahren mit einer keramischen Schicht aus SiO$_x$ beschichtet, wobei die SiO$_x$-Schicht eine Dicke von 80 nm aufweist. Die PE-Folie stellt ein Polyethylen hoher Dichte (HDPE) einer Dichte von 0,95 g/m$^3$ dar. Gegen die keramische Schicht wird eine weitere Polyethylenfolie (LDPE) in einer Dicke von 100 μm kaschiert.

Beispiel 4

Eine Polyamidfolie der Dicke von 20 μm wird im Vakuumdünnschichtverfahren mit einer SiO$_x$-Schicht ver-sehen. Das x in der Formel SiO$_x$ hat die Bedeutung einer Zahl von 1,2 bis 1,7. Die Dicke der SiO$_x$-Schicht ist 80 nm. Gegen die so erhaltene Folie auf der Seite der keramischen Beschichtung wird eine weitere Polyamid-folie kaschiert.

**Laminataufbau:**

| 1 a) | 1 b) |
|---|---|
| oPP / SiOx  —  cPP | oPP  —  SiOx / cPP |

| | Sauerstoffbarriere<br>ASTM D 3985-81<br>25° C, 50 % rH | Wasserdampfbarriere<br>ASTM F 372-78<br>25° C, 90 % rH |
|---|---|---|
| 1 a) | < 4 cm³/(m²·d·bar) | < 0.05 g/(m²·d) |
| 1 b) | < 4 cm³/(m²·d·bar) | < 0.05 g/(m²·d) |

Tabelle I

**Tabelle II**

| Laminataufbau: 2) | PET | SiOx | G-PET | | |
|---|---|---|---|---|---|
| Sauerstoffbarriere | | | < 0.2 cm³/(m²·d·bar) | ASTM D 3985-81 25° C, 50 % rH |
| Wasserdampfbarriere | | | < 0.2 g/(m²·d) | ASTM F 372-78 25° C, 90 % rH |

Beispiel 5

Die Folienverbunde gemäss Beispielen 1 bis 4 werden zu Siegelnahtbeuteln verarbeitet. Die Siegelnahtbeutel können nach Befüllen, Verschliessen, Öffnen und Entleeren und Trennen nach Stoffgruppen stoffrezykliert werden. Die Sortenreinheit des Rezyklats wird dadurch gewahrt.

**Patentansprüche**

1. Kunststoffolienverbunde, enthaltend eine Permeabilitätssperrschicht, dadurch gekennzeichnet, dass die Kunststoffolien eines Kunststoffolienverbundes aus Werkstoffen der gleichen Stoffgruppe aufgebaut sind und zwischen wenigstens zwei Kunststoffolien sich eine Permeabilitätssperrschicht aus Oxiden und/oder Nitriden von Metallen und/oder Halbmetallen, die durch Vakuumdünnschichtverfahren erzeugt ist, befindet.

2. Kunststoffolienverbunde nach Anspruch 1, dadurch gekennzeichnet, dass die Stoffgruppe aus den Polyolefinen, den Polyestern oder den Polyamiden ausgewählt ist.

3. Kunststoffolienverbunde nach Anspruch 2, dadurch gekennzeichnet, dass die Stoffgruppe aus Polyethylenen, Polypropylenen, Polyethylenterephthalaten, Polycaprolactamen ausgewählt ist.

4. Kunststoffolienverbunde nach Anspruch 1, dadurch gekennzeichnet, dass die Permeabilitätssperrschicht aus Oxiden und/oder Nitriden von Metallen und/oder Halbmetallen in Form einer 5 bis 500 nm dicken keramischen Schicht vorliegt.

5. Kunststoffolienverbunde nach Anspruch 1, dadurch gekennzeichnet, dass die Permeabilitätssperrschicht aus Oxiden von Metallen und/oder Halbmetallen eine 10 bis 500 nm dicke keramische Schicht eines Siliciumoxides der allgemeinen Formel $SiO_x$, wobei x eine Zahl von 1,2 bis 1,7 ist oder eines Aluminiumoxides der allgemeinen Formel $Al_yO_z$, wobei y/z eine Zahl von 0,2 bis 1,5 ist, darstellt.

6. Kunststoffolienverbunde nach Anspruch 1, dadurch gekennzeichnet, dass eine Kunststoffolie einseitig mit einer Permeabilitätssperrschicht aus Oxiden und/oder Nitriden von Metallen und/oder Halbmetallen, die durch Vakuumdünnschichtverfahren erzeugt ist, beschichtet ist und auf der Permeabilitätsschicht eine weitere Kunststoffolie befindlich ist.

7. Kunststoffolienverbunde nach Anspruch 1, dadurch gekennzeichnet, dass die Kunststoffolien Polypropylen enthalten oder daraus bestehen und eine Permeabilitätssperrschicht auf einer der Polypropylenfolien befindlich ist.

8. Kunststoffolienverbunde nach Anspruch 1, dadurch gekennzeichnet, dass der Kunststoffolienverbund eine Folie aus 20 bis 30 μm dickem orientiertem Polypropylen und eine Folie aus 80 bis 120 μm dickem gegossenem (cast) Polypropylen und eine Permeabilitätssperrschicht, die zwischen der Folie aus orientiertem Polypropylen und der Folie aus gegossenem Polypropylen befindlich ist, enthält.

9. Kunststoffolienverbunde nach Anspruch 1, dadurch gekennzeichnet, dass die Kunststoffolien Polyethylenterephthalate enthalten oder daraus bestehen und eine Permeabilitätssperrschicht auf einer der Polyethylenterephthalatfolien befindlich ist.

10. Kunststoffolienverbunde nach Anspruch 1, dadurch gekennzeichnet, dass der Kunststoffolienverbund eine Folie aus 10 bis 15 μm dickem Polyethylenterephthalat und eine Folie aus 80 bis 120 μm dickem G-PET und eine Permeabilitätssperrschicht, die zwischen der Folie aus Polyethylenterephthalat und der Folie aus G-PET befindlich ist, enthält.

11. Kunststoffolienverbunde nach Anspruch 1, dadurch gekennzeichnet, dass die Menge der Oxide und/oder Nitride der Metalle und/oder Halbmetalle der Permeabilitätssperrschicht 30 bis 400 mg/m$^2$ Kunststoffolienverbund beträgt.

12. Verwendung der Kunststoffolienverbunde gemäss Anspruch 1 als Verpackungsmaterial für Beutel, Siegelnahtbeutel, Schlauchbeutel, Standbeutel, Sachets, Säcke, Taschen und Einwickler, Schalen, Bedeckelungen, Nahrungsmittelbehälter und Menueschalen.

Europäisches
Patentamt

## EUROPÄISCHER RECHERCHENBERICHT

Nummer der Anmeldung

EP     92 81 0866

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 086 482 (E. I. DU PONT DE NEMOURS & CO.)<br>* Seite 1, Zeile 81 - Seite 2, Zeile 4 *<br>* Seite 3, Zeile 29 - Zeile 115; Ansprüche 5,6,10 *<br>--- | 1-6,7,12 | B32B27/08<br>B65D65/40 |
| X | EP-A-0 385 054 (TETRA PAK)<br>* Spalte 2, Zeile 28 - Zeile 44 *<br>* Spalte 3, Zeile 54 - Spalte 4, Zeile 39 * | 1-4,12 | |
| A | ---<br> | 5,6 | |
| A | EP-A-0 372 489 (MITSUBISHI MONSANTO CHEM. CO. LTD.)<br>* Seite 3, Zeile 37 - Seite 4, Zeile 39 *<br>--- | 1-6 | |
| A | GB-A-2 064 427 (A. H. WINDLE ET AL.)<br>* DAS GANZE DOKUMENT *<br><br>----- | 1-3,9 | |

| | | | RECHERCHIERTE SACHGEBIETE (Int. Cl.5) |
|---|---|---|---|
| | | | B32B<br>B65D |

Der vorliegende Recherchenbericht wurde für alle Patentansprüche erstellt

| Recherchenort | Abschlußdatum der Recherche | Prüfer |
|---|---|---|
| DEN HAAG | 25 FEBRUAR 1993 | MCCONNELL C.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................................
& : Mitglied der gleichen Patentfamilie, übereinstimmendes Dokument

EPO FORM 1503 03.82 (P0403)